# EUROPÄISCHE PATENTSCHRIFT

(11) **EP 1 119 093 B1**
(45) Veröffentlichungstag und Bekanntmachung des Hinweises auf die Patenterteilung: **16.04.2008**
(21) Anmeldenummer: 00127914.0
(22) Anmeldetag: 20.12.2000
(51) Int. Cl.: H02K 51/00

(54) **Magnetoelektrisches Getriebe**
Magnetoelectric gearing
Engrenage magnétoélectrique

(30) Priorität: 22.01.2000 DE 10002616
(43) Veröffentlichungstag der Anmeldung: 25.07.2001
(73) Patentinhaber: Volkswagen Aktiengesellschaft, 38436 Wolfsburg (DE)
(72) Erfinder: Hanke, Stefan, Dipl.-Ing., 38104 Braunschweig (DE)

(56) Entgegenhaltungen:
- GB-A- 2 078 016
- US-A- 5 675 203

## Beschreibung

Die vorliegende Erfindung betrifft ganz allgemein ein magnetoelektrisches Getriebe, und betrifft insbesondere ein magnetoelektrisches Getriebe für ein Kraftfahrzeug gemäß dem Oberbegriff des Patentanspruches 1.

Solche magnetoelektrischen Getriebe sind an sich bekannt, beispielsweise aus der DE-PS 44 08 719. Dort ist an einer zentralen Achse ein Statorträger vorgesehen, der mechanisch, und zwar mittels einer Stange, die durch eine Öffnung in einem Gehäuse des Getriebes herausgeführt ist, verschoben werden kann.
Der Statorträger wird axial verschoben.
Diese axiale Verschieblichkeit des Statorträgers, und damit des Stators, der die Wicklung trägt, bewirkt, dass die wirksame Leiterlänge verändert werden kann. Eine Veränderung der wirksamen Leiterlänge in den Magnetfeldern des Motor- bzw. Generatorteils des magnetoelektrischen Getriebes beeinflusst die Drehzahl- und Momentenübersetzung des Getriebes.

Grundsätzlich ist hier anzumerken, daß dieses magnetoelektrische Getriebe eine magnetoelektrische Maschine ist, die sowohl als Generator als auch als Motor einsetzbar ist.
Ein solcher elektromagnetischer Drehmomentwandler ist vorzugsweise bei einem Kraftfahrzeug mit Hybridantrieb einsetzbar.

Die mechanische Verstellung der axialen Lage des Statorträgers erfolgt durch die Betätigung der oben erwähnten Stange. Diese Stangenverstellung ist nur ungenau und wenig präzise durchzuführen

Des Weiteren ist aus der GB 2 078 016 A eine Kraftübertragung für einen Hybridantrieb bekannt. In dieser Schrift ist ein Getriebesystem beschrieben, das einen Verbrennungsmotor und eine dynamoelektrische Einheit umfasst. Die dynamoelektrische Einheit besteht aus einem Schwungrad zur Speicherung kinetischer Energie und einer elektrodynamischen Kopplung zur Drehmoment-Übertragung von Verbrennungsmotor über eine Welle zum Schwungrad oder zur Übertragung von Drehmoment zwischen Schwungrad und Antrieb. Über einen Aktuator wird ein Rotor mit Magneten an der Außenseite in axialer Richtung verschoben und damit der Kopplungsgrad verändert.

Demzufolge ist es die Aufgabe der vorliegenden Erfindung, ein gattungsgemäßes magnetoelektrisches Getriebe derart weiterzubilden, daß eine sehr genaue und sehr präzise Verstellung eines Statorträgers ermöglicht ist.

Diese Aufgabe wird durch ein magnetoelektrisches Getriebe gelöst, welches die Merkmale gemäß dem kennzeichnenden Teil des Patentanspruchs 1 aufweist.

Demnach weist ein erfindungsgemäßes magnetoelektrisches Getriebe, das insbesondere für ein Kraftfahrzeug vorgesehen ist, einen Statorträger auf, der über eine Lagerung konzentrisch zu und axial Verlagerbar an einer zentralen Achse gelagert ist, wobei auf dem Statorträger ein Stator mit einer Wicklung angeordnet ist, und wobei der Statorträger hydraulisch verstellbar über zumindest eine Verstellkolbenstange ausgebildet ist, an der der Statorträger axial verschieblich abgestützt ist und die Abstützung an sich über zumindest zwei hydraulische Versiellkolbenstangen bewirkt wird.

Mit dieser Anordnung läßt sich eine schnelle Verstellung des Statorträgers im Bereich von etwa 1m pro Sekunde erreichen, wobei eine hohe Positioniergenauigkeit vorliegt. Vorzugsweise ist der Statorträger über Gleitlager gelagert. Durch diese Art der Lagerung kann auch ein entsprechend hohes Drehmoment übertragen werden, welches im Bereich von 500 bis 600 Nm liegt. Hierzu ist die Lagerung möglichst weit von der zentralen Achse entfernt angeordnet.

Weitere vorteilhafte Weiterbildungen des erfindungsgemäßen elektromagnetischen Getriebes sind der Gegenstand von Unteransprüchen

Die vorliegende Erfindung wird im folgenden anhand einer bevorzugten Ausführungsform erläutert werden, wobei in der:
- Fig. 1: ein Teil des erfindungsgemäßen magnetoelektrischen Getriebes im Querschnitt dargestellt ist; und
- Fig. 2: ein weiterer Schnitt dieses Getriebes entlang der strichpunktierten Linie A-A nach der Figur 1 dargestellt ist.

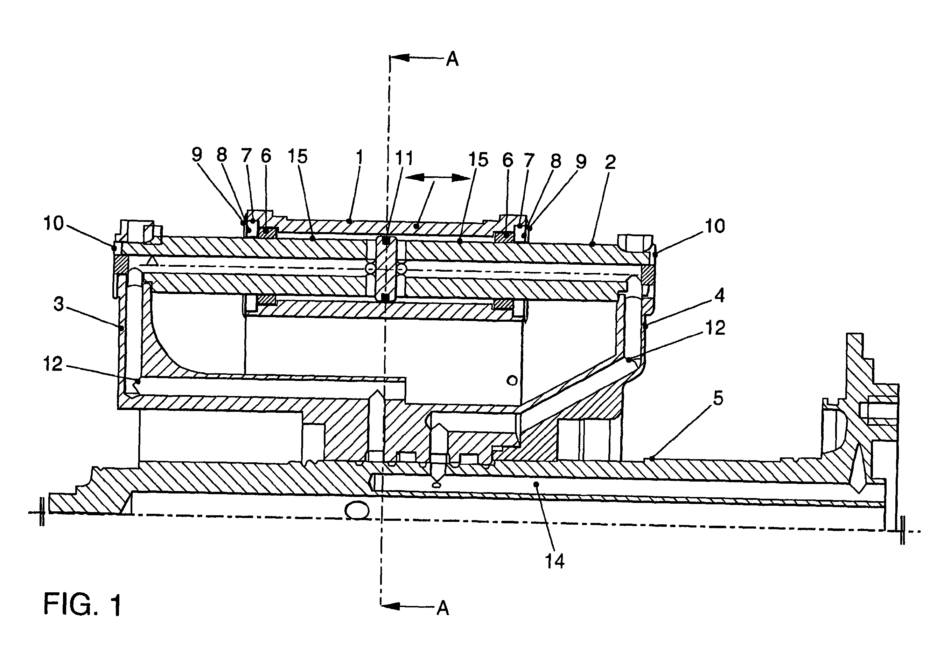

In der Figur 1 ist das magnetoelektrische Getriebe in einer Schnittdarstellung gezeigt, wobei ein Statorträger 1 koaxial zu einer zentralen Achse 5 gelagert ist. Der Statorträger 1 ist relativ zu der zentralen Achse 5 drehfest, jedoch axial verschiebbar angeordnet.

Hierzu befinden sich an der zentralen Achse 5 zwei Aufnahmen 3 und 4, von denen in der Figur 1 die Aufnahme 3 auf der linken Seite und die Aufnahme 4 auf der rechten Seite gezeigt ist. An diesen Aufnahmen 3 und 4, die jeweils drehfest und axial nicht verschiebbar an der zentralen Achse 5 befestigt sind, ist eine Verstellkolbenstange 2 abgestützt. In der Figur 1 ist eine solche Verstellkolbenstange 2 im Schnitt dargestellt.

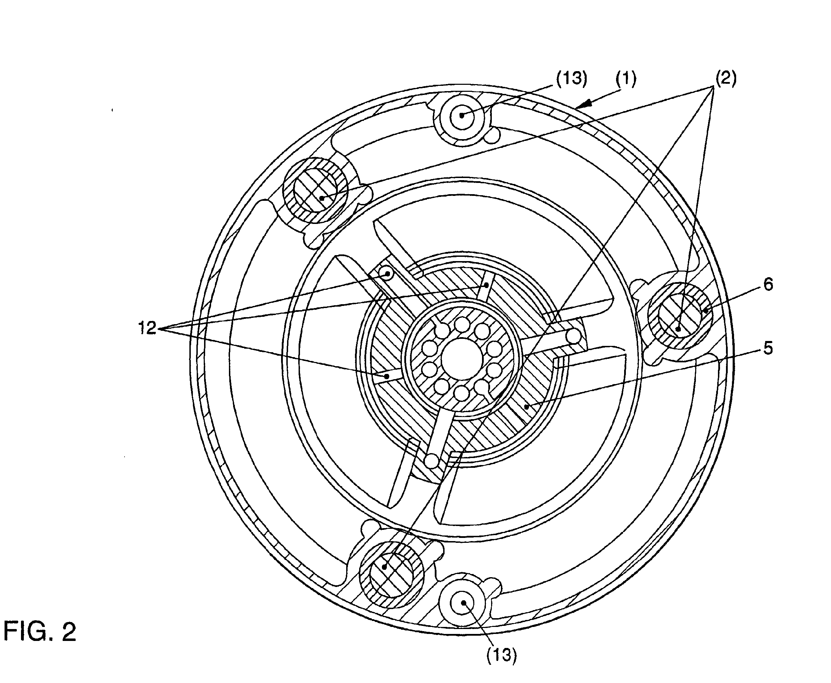

Nach der Figur 2 ist zu erkennen, daß dort drei Verstellkolbenstangen 2 am Umfang des Statorträgers 1 gleichmäßig verteilt, angeordnet sind. Der Winkelabstand beträgt dort 120° zwischen den Verstellkolbenstangen 2.

Die Verstellkolbenstange 2 ist ebenfalls feststehend und an der Aufnahme 3, 4 durch einen Deckel 10 an beiden axialen Enden abgedeckt.

An der Verstellkolbenstange 2 bzw. an den Verstellkolbenstangen 2 ist der Statorträger 1 gelagert.

Die Lagerung zwischen jeder Verstellkolbenstange 2 und dem Statorträger 1 erfolgt mittels zweier Gleitlager 6, die an den axialen Endbereichen des Statorträgers 1 vorgesehen sind. Der Statorträger 1 umgreift daher im Bereich der Verstellkolbenstange 2 diese vollständig, wie im Beispiel nach der Figur 2 zeichnerisch wiedergegeben.

Die Gleitlager 6 sind am Statorträger 1 eingepreßt und in Richtung nach außen durch eine Scheibe 7, eine Stangendichtung 8 und einen Deckel 9 abgeschlossen.

Zwischen dem Statorträger 1 und der Verstellkolbenstange 2 ist ein ringförmiger Fluidraum 15 ausgebildet, der durch eine mittige Kolbendichtung 11 in zwei Fluidräume unterteilt ist. Diese Fluidräume 15 werden über zentrale Leitungen in der Verstellkolbenstange 2, über Zuleitungen 12 in den Aufnahmen 3 und 4, sowie über die Hydraulikkanäle 14 in der zentralen Achse 5 mit einem Hydraulikfluid, bevorzugt Hydrauliköl, versorgt.

Die Verstellkolbenstangen 2 wirken zweiseitig, d.h. das durch Aufbau einer Druckdifferenz in den Fluidräumen 15 auf den beiden Seiten der Kolbendichtung 11 der Statorträger 1 verlagert werden kann. Wird in dem in der Figur 1 links dargestellten Fluidraum 15 ein höherer Druck erzeugt, so bewegt sich der Statorträger 1 ebenfalls nach links. Wird in dem in der Figur 1 rechts dargestellten Fluidraum 15 ein höherer Druck erzeugt, so bewegt sich der Statorträger 1 nach rechts.

Die Wirkfläche im Fluidraum 15 ist in der gezeigten Ausführungsform durch die stirnseitige Ringfläche des Gleitlagers 6 ausgebildet.

In der Figur 2 ist gezeigt, daß am Umfang des Statorträgers 1 drei Verstellkolbenstangen 2 verteilt angeordnet sind. Hierdurch wird das Auftreten von Kippmomenten verhindert, die ansonsten zwischen Statorträger 1 und Verstellkolbenstange 2 auftreten könnten.

In der Figur 2 ist mit dem Bezugszeichen 13 jeweils eine Kühlstange bezeichnet, die zu Kühlzwecken mit einem Kühlmedium beschickt werden kann.

In den Zeichnungen nicht dargestellt ist die hydraulische Steuerung zur Regelung der Hydraulikdrücke in den Fluidräumen 15.

Die Steuerung sorgt dafür, daß die Druckdifferenz zwischen den Fluidräumen 15, d.h. links und rechts der Kolbendichtung 11, derart geregelt wird, daß eine sehr schnelle und hochgenaue Positionierung des Statorträgers 1 in axialer Richtung ermöglicht ist.

Zusammenfassend dargestellt, weist ein erfindungsgemäßes magnetoelektrisches Getriebe für ein Kraftfahrzeug, einen Statorträger 1 auf, der über eine Lagerung 6 konzentrisch zu und axial verlagerbar an einer zentralen Achse 5 des Getriebes gelagert ist, wobei auf dem Statorträger 1 ein Stator mit einer Wicklung angeordnet ist und wobei der Statorträger 1 hydraulisch verstellbar ausgebildet ist. Mit dieser Anordnung läßt sich eine schnelle Verstellung des Statorträgers 1 im Bereich von etwa 1m pro Sekunde erreichen, wobei eine hohe Positioniergenauigkeit vorliegt.

### BEZUGSZEICHENLISTE

- 1: Statorträger
- 2: Verstellkolbenstange(n)
- 3: Aufnahme
- 4: Aufnahme
- 5: Zentrale Achse
- 6: Lagerung
- 7: Scheibe
- 8: Stangendichtung
- 9: Deckel
- 10: Deckel
- 11: Kolbendichtung
- 12: Zuleitung(en)
- 13: Kühlstange(n)
- 14: Hydraulikkanal
- 15: Fluidraum

## Patentansprüche

1. Magnetoelektrisches Getriebe, insbesondere für ein Kraftfahrzeug, mit: einem Statorträger (1), der über eine Lagerung (6) konzentrisch zu und axial verlagerbar an einer zentralen Achse (5) gelagert ist, wobei auf dem Statorträger (1) ein Stator mit einer Wicklung angeordnet ist, wobei der Statorträger mechanisch axial verschieblich zu einer, Beeinflussung einer Drehzahlübersetzung und einer Momentenübersetzung des Getriebes angeordnet ist
**dadurch gekennzeichnet,**
**dass** der Statorträger (1) hydraulisch verstellbar ausgebildet ist, wobei zwischen dem Statorträger (1) und der zentralen Achse (5) zur zumindest zwei Abstützung des Statorträgers hydraulische Verstellkolbenstangen (2) angeordnet sind

2. Magnetoelektrisches Getriebe nach Anspruch 1, **dadurch gekennzeichnet,dass** zwischen dem Statorträger (1) und der zentralen Achse (5) zur Verstellung des statorträgers zumindest eine hydraulische Verstellkolbenstange (2) angeordnet ist. '

3. Magnetoelektrisches Getriebe nach einem der Ansprüche 1 bis, 2, **dadurch gekennzeichnet, dass** am Umfang des Statorträgers (1) drei hydraulische Verstellkolbenstangen (2) angeordnet sind.

4. Magnetoelektrisches Getriebe nach einem der Ansprüche 1 bis 3, **dadurch gekennzeichnet, dass** die Verstellkolbenstange (2) zweiseitig wirkt.

5. Magnetoelektrisches Getriebe nach einem der Ansprüche 1 bis 4, **dadurch gekennzeichnet, dass** die Mehrzahl an Verstellkolbenstangen (2) am Umfang des Statorträgers (1) gleichbeabstandet angeordnet ist.

6. Magnetoelektrisches Getriebe nach einem der Ansprüche 1, bis 5, **dadurch gekennzeichnet, dass** der Statorträger (1) an seinen beiden axialen Endbereichen über jeweils eine Aufnahme (3, 4) an der zentralen Achse (5) abgestützt ist.

7. Magnetoelektrisches Getriebe nach Anspruch 6, **dadurch gekennzeichnet, dass** in den Aufnahmen (3, 4) jeweils eine Zuleitung (12) für ein Hydraulikfluid ausgebildet sind.

8. Magnetoelektrisches Getriebe nach Anspruch 7, **dadurch gekennzeichnet, dass** in der zentralen Achse (5) Hydraulikkanäle (14) ausgebildet sind, die mit den Zuleitungen (12) in Verbindung stehen.

9. Magnetoelektrisches Getriebe nach einem der Anspruche 6 bis 8, **dadurch gekennzeichnet, dass** jede Verstellkolbenstange (2) an den beiden axialen Endbereichen an den Aufnahmen (3, 4) abgestützt ist.

10. Magnetoelektrisches Getriebe nach einem der Ansprüche 1 bis 9, **dadurch gekennzeichnet, dass** der Statorträger (1) durch Einleiten von Hydraulikfluid in einen Fluidraum (15) mittels der zumindest einen Verstellkolbenstange (2) axial verschoben wird

11. Magnetoelektrisches Getriebe nach Anspruch 10, **dadurch gekennzeichnet, daß** der Fluidraum (15) als Ringraum ausgebildet ist, der zwischen jeder Verstellkolbenstange (2) und dem Statorträger (1) ausgebildet ist.

12. Magnetoelektrisches Getriebe nach einem der Ansprüche 1 bis 11, **dadurch gekennzeichnet, dass** der Statorträger (1) mittels zweier Gleitlagerungen (6) an jeder Verstellkolbenstange (2) gelagert ist.

13. Magnetoelektrisches Getriebe nach einem der Ansprüche 6 bis 12, **dadurch gekennzeichnet, dass** die Aufnahmen (3, 4) und die Verstellkolbenstangen (2) auf der zentralen Achse (5) drehfest und axial nicht verschiebbar gehalten sind.

14. Magnetoelektrisches Getriebe nach einem der Ansprüche 1 bis 13, **dadurch gekennzeichnet, daß** der Statorträger (1) in den beiden Wirkrichtungen, in denen der Statorträger (1) mit dem hydraulischen Druck beaufschlagt ist, durch die hydraulische Verstellung durch Aufbau einer kurzzeitigen Druckdifferenz verschiebbar ist.

15. Magnetoelektrisches Getriebe nach Anspruch 14, **dadurch gekennzeichnet, dass** eine hydraulische Steuerung vorgesehen ist, die die hydraulischen Drücke regelt.

## Claims

1. Magnetoelectric gear mechanism, in particular for a motor vehicle, comprising:
a stator holder (1) which is mounted by means of a bearing (6) concentrically to and in an axially moveable manner on a central shaft (5), with a stator having a winding being arranged on the stator holder (1), with the stator holder being arranged in a mechanically axially displaceable manner to influence a rotation speed transmission ratio and a torque transmission ratio of the gear mechanism,
**characterized**
**in that** the stator holder (1) can be hydraulically adjusted, with at least two hydraulic adjusting piston rods (2) being arranged between the stator holder (1) and the central shaft (5) for supporting the stator holder.

2. Magnetoelectric gear mechanism according to Claim 1, **characterized in that** at least one hydraulic adjusting piston rod (2) is arranged between the stator holder (1) and the central shaft (5) for adjusting the stator holder.

3. Magnetoelectric gear mechanism according to either of Claims 1 and 2, **characterized in that** three hydraulic adjusting piston rods (2) are arranged on the circumference of the stator holder (1).

4. Magnetoelectric gear mechanism according to one of Claims 1 to 3, **characterized in that** the adjusting piston rod (2) acts on two sides.

5. Magnetoelectric gear mechanism according to one of Claims 1 to 4, **characterized in that** the plurality of adjusting piston rods (2) on the circumference of the stator holder (1) are arranged in equidistant fashion.

6. Magnetoelectric gear mechanism according to one of Claims 1 to 5, **characterized in that** the stator holder (1) is supported, at its two axial end regions, by means of in each case one support (3, 4) on the central shaft (5).

7. Magnetoelectric gear mechanism according to Claim 6, **characterized in that** a supply line (12) for a hydraulic fluid is in each case formed in the supports (3, 4).

8. Magnetoelectric gear mechanism according to Claim 7, **characterized in that** hydraulic ducts (14) which are connected to the supply lines (12) are formed in the central shaft (5).

9. Magnetoelectric gear mechanism according to one of Claims 6 to 8, **characterized in that** each adjusting piston rod (2) is supported, at the two axial end regions, on the supports (3, 4).

10. Magnetoelectric gear mechanism according to one of Claims 1 to 9, **characterized in that** the stator holder (1) is axially displaced by means of the at least one adjusting piston rod (2) due to the introduction of hydraulic fluid into a fluid chamber (15).

11. Magnetoelectric gear mechanism according to Claim 10, **characterized in that** the fluid chamber (15) is in the form of an annular chamber which is formed between each adjusting piston rod (2) and the stator holder (1).

12. Magnetoelectric gear mechanism according to one of Claims 1 to 11, **characterized in that** the stator holder (1) is mounted on each adjusting piston rod (2) by means of two sliding bearings (6).

13. Magnetoelectric gear mechanism according to one of Claims 6 to 12, **characterized in that** the supports (3, 4) and the adjusting piston rods (2) are retained on the central shaft (5) such that they are fixed in terms of rotation and cannot be axially displaced.

14. Magnetoelectric gear mechanism according to one of Claims 1 to 13, **characterized in that** the stator holder (1) can be displaced in the two directions of action, in which hydraulic pressure is applied to the stator holder (1), by the hydraulic adjustment due to the build-up of a brief pressure difference.

15. Magnetoelectric gear mechanism according to Claim 14, **characterized in that** a hydraulic control system which regulates the hydraulic pressures is provided.

## Revendications

1. Engrenage magnétoélectrique, notamment pour un véhicule automobile, comprenant :
un support de stator (1) qui est monté de manière concentrique et déplaçable axialement sur un axe central (5) par le biais d'un support sur palier (6), un stator avec un enroulement étant disposé sur le support de stator (1), le support de stator étant disposé de manière déplaçable mécaniquement en direction axiale en vue d'influencer une démultiplication de vitesse et une démultiplication de couple de l'engrenage,
**caractérisé en ce que**
le support de stator (1) est réalisé de manière déplaçable hydrauliquement, au moins deux tiges de piston de réglage hydrauliques (2) étant disposées entre le support de stator (1) et l'axe central (5) pour le support du support de stator.

2. Engrenage magnétoélectrique selon la revendication 1, **caractérisé en ce que** l'on dispose entre le support de stator (1) et l'axe central (5), pour le réglage du support de stator, au moins une tige de piston de réglage hydraulique (2).

3. Engrenage magnétoélectrique selon l'une quelconque des revendications 1 à 2, **caractérisé en ce que** l'on dispose sur la périphérie du support de stator (1) trois tiges de piston de réglage hydrauliques (2).

4. Engrenage magnétoélectrique selon l'une quelconque des revendications 1 à 3, **caractérisé en ce que** la tige de piston de réglage (2) agit sur deux côtés,

5. Engrenage magnétoélectrique selon, l'une quelconque des revendications 1 à 4, **caractérisé en ce que** la pluralité de tiges de piston de réglage (2) est disposée de manière équidistante sur la périphérie du support de stator (1).

6. Engrenage magnétoélectrique selon l'une quelconque des revendications 1 à 5, **caractérisé en ce que** le support de stator (1) est supporté au niveau de ses deux régions d'extrémité axiales par le biais d'un logement respectif (3, 4) sur l'axe central (5) .

7. Engrenage magnétoélectrique selon la revendication 6, **caractérisé en ce qu'**une conduite d'amenée (12) est réalisée à chaque fois dans les logements (3, 4) pour le fluide hydraulique.

8. Engrenage magnétoélectrique selon la revendication 7, **caractérisé en ce que** dans l'axe central (5) sont réalisés des canaux hydrauliques (14), qui sont en liaison avec les conduites d'amenée (12).

9. Engrenage magnétoélectrique selon l'une quelconque des revendications 6 à 8, **caractérisé en ce que** chaque tige de piston de réglage (2) est supportée au niveau des deux régions d'extrémité axiales sur les logements (3, 4).

10. Engrenage magnétoélectrique selon l'une quelconque des revendications 1 à 9, **caractérisé en ce que** le support de stator (1) est déplacé axialement par l'introduction de fluide hydraulique dans un espace de fluide (15) au moyen de l'au moins une tige de piston de réglage (2).

11. Engrenage magnétoélectrique selon la revendication 10, **caractérisé en ce,que** l'espace de fluide (15) est réalisé sous forme d'espace annulaire, qui est réalisé entre chaque tige de piston de réglage (2) et le support de stator (1).

12. Engrenage magnétoélectrique selon l'une quelconque des revendications 1 à 11, **caractérisé en ce que** le support de stator (1) est monté sur chaque tige de piston de réglage (2) au moyen de deux supports sur palier lisses (6).

13. Engrenage magnétoélectrique selon l'une quelconque des revendications 6 à 12, **caractérisé en ce que** les logements (3, 4) et les tiges de piston de réglage (2) sont maintenus sur l'axe central (5) de manière solidaire en rotation et non déplaçable axialement.

14. Engrenage magnétoélectrique selon l'une quelconque des revendications 1 à 13, **caractérisé en ce que** le support de stator (1) est déplaçable dans les deux directions d'action, dans lesquelles le support de stator (1) est sollicité en pression hydraulique, par le déplacement hydraulique par la création d'une brève différence de pression.

15. Engrenage magnétoélectrique selon la revendication 14, **caractérisé en ce qu'**il est prévu une commande hydraulique qui régule les pressions hydrauliques.
